# EUROPEAN PATENT APPLICATION

(11) **EP 1 103 752 A1**
(43) Date of publication of application: **30.05.2001**
(21) Application number: 00830754.8
(22) Date of filing: 16.11.2000
(51) Int. Cl.: F16L 25/00

(54) **Flexible corrugated tube with end fittings for hydraulic systems**

(30) Priority: 26.11.1999 IT BS990111; 15.03.2000 IT BS000020; 17.03.2000 IT BS000023
(71) Applicant: Eureka Immobiliare S.r.l., 25065 Lumezzane Piatucco (Brescia) (IT)
(72) Inventor: Bonomini, Costantino, 25065 Lumezzane Piatucco (Brescia) (IT)
(74) Representative: Manzoni, Alessandro

(57) **Abstract**

This invention regards a flexible corrugated tube (11) in plastic, with at least one wall uniformly corrugated or grooved, and where each end has an end coupling (12), fixed axially with the interposition of at least one grommet (17) and the use of at least one yoke clamp (20), which is applied to the grooves of the tube (11) via slots (18) made in one external wall (13) of the coupling (12). The yoke clamp (20) is equipped with means (21,22) for pressure fastening it to the coupling (12) inside the tube (11).

## Description

This invention regards a flexible corrugated tube for use in hydraulic systems, especially for drainage, but not only.

On the one hand, there already exist flexible plastic tubes with a uniform corrugated or grooved wall. These tubes may also be equipped with an internal lining to make the internal surface smooth and continuous rather than undulating (see, for example, DE-39 06 752; EP-0 410 339).

On the other hand, there also exist flexible corrugated tubes with plastic end couplings applied, held in place by welding or by over-moulding (see, for example, DE-41 28 057; DE-42 32 199; EP-0 271 598). However, these flexible corrugated tubes with permanently fixed couplings are necessarily made in standard lengths, decided at the outset; they are not always compatible with real needs and cannot be altered at the moment of being used. This represents a major problem for the manufacturing and marketing of such tubes. In fact, in order to meet the various possible requests, it would be necessary to produce and supply a vast range of tubes, complete with end couplings, leading to extra expenses of production, storage, handling, selection, etc, while still not being able to meet the more particular and specific requirements of installers.

The aim of this invention is to effectively resolve such a problem, thereby supplying a flexible corrugated tube for the above-mentioned use, in which the end couplings may be added and fitted directly by the installer.

Another aim of the invention is to supply the means for a simple application of the end couplings to a flexible corrugated tube, without the need for particular tools.

Another aim of the invention is to supply a combination of flexible corrugated tube and end couplings that can be kept detached until they are needed and then be assembled by the user himself, without limitations as to the length of the tube.

Yet another aim of the invention is to propose a combination of corrugated tube and end couplings that can be connected in the same way to bodies of various different shapes, such as adapters, joints, technical bends, manifolds, well traps, plugs, all of which are commonly used in hydraulic systems, each part being made in order to fit the said couplings.

Said aims and the advantages they imply are achieved by means of a flexible tube according to claim 1.

One immediate and obvious advantage is that the user can first choose and then cut the tube to the length desired and according to the installation needs, then fix the end couplings to the tube simply and rapidly, without being obliged to use pre-established tube lengths.

Another advantage is that there is no need for prior glueing or over-welding of the end couplings to the ends, and that male and/or female couplings can be fitted as necessary.

A further advantage is the reduction and simplification of the warehouse stock, since it is not necessary to prepare and stockpile tubes of different fixed lengths.

The enclosed drawings illustrate various examples of the invention, where:
Fig. 1 shows a side view of one part of the tube, an end coupling and a yoke clamp, detached;
Fig. 2 shows the tube and the end coupling of Fig. 1 in a lengthwise cross-section;
Fig. 3 shows one example of the yoke clamp for the end coupling on the tube;
Fig. 4 shows the tube and coupling assembled by means of the yoke and with the interposition of a grommet;
Fig. 5 shows a cross-section of the whole, according to the arrows V-V in Fig. 4, that is, at the level of the yoke clamp;
Fig. 6 shows another favoured example of the yoke clamp for the end coupling of the tube;
Fig. 7 shows a cross-section of an assembled tube and coupling, with the yoke of Fig. 6;
Fig. 8 shows another example of the yoke clamp for the tube coupling;
Fig. 9 shows a similar cross-section to that of Fig. 3, using the yoke of Fig. 8;
Figs 10, 11, 12, 13, 14 and 15 show cross-sections of different types of adapter-joints;
Figs 16 and 16a show a view and a cross-section of a technical bend;
Figs 17 and 17a show a view and a cross-section of a Y branch;
Fig. 18 shows the cross-section of a manifold;
Figs 19 and 19a show a front cross-section and the view from above of a well trap;
Fig. 20 shows the cross-section of a manifold;
Fig. 21 shows the cross-section of a plug; and
Fig. 22 shows one use of adapters on a manifold.

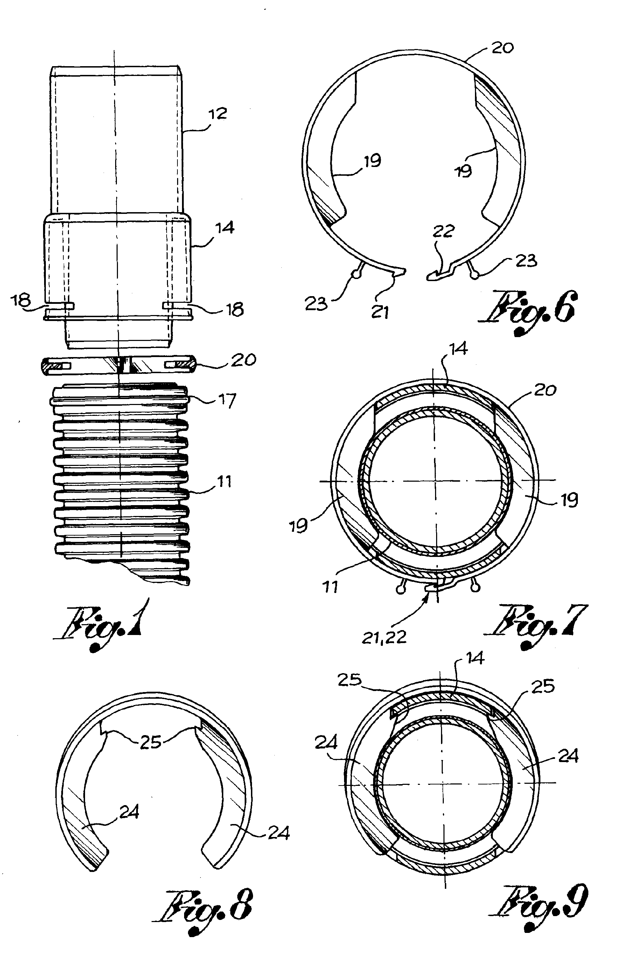

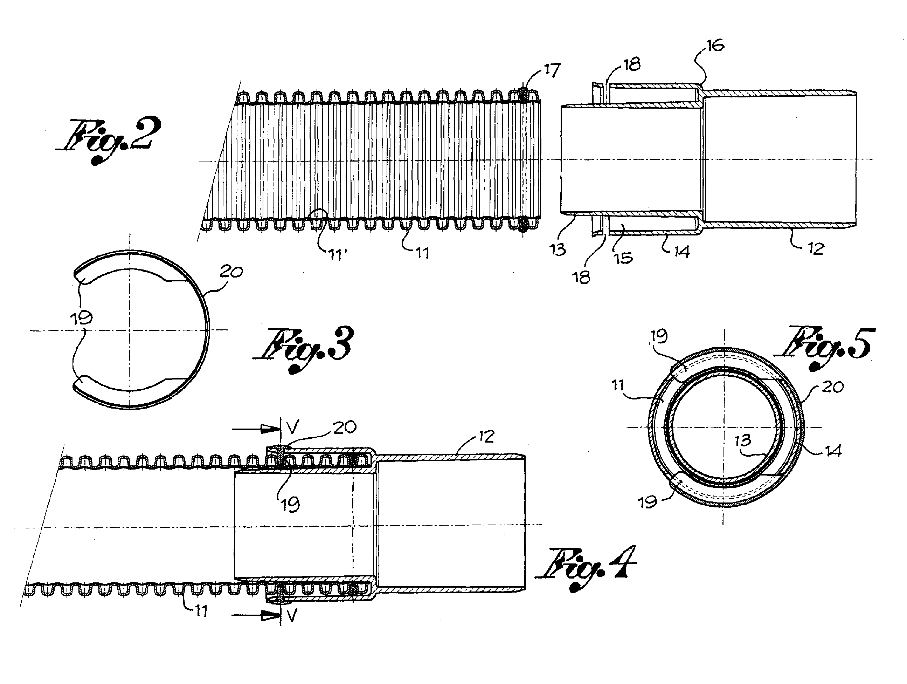

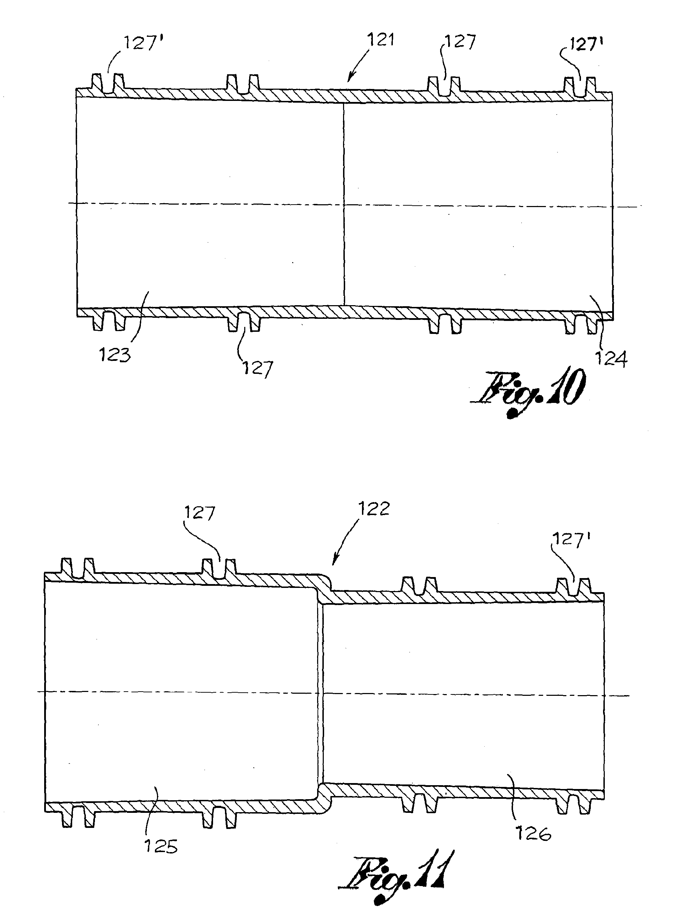

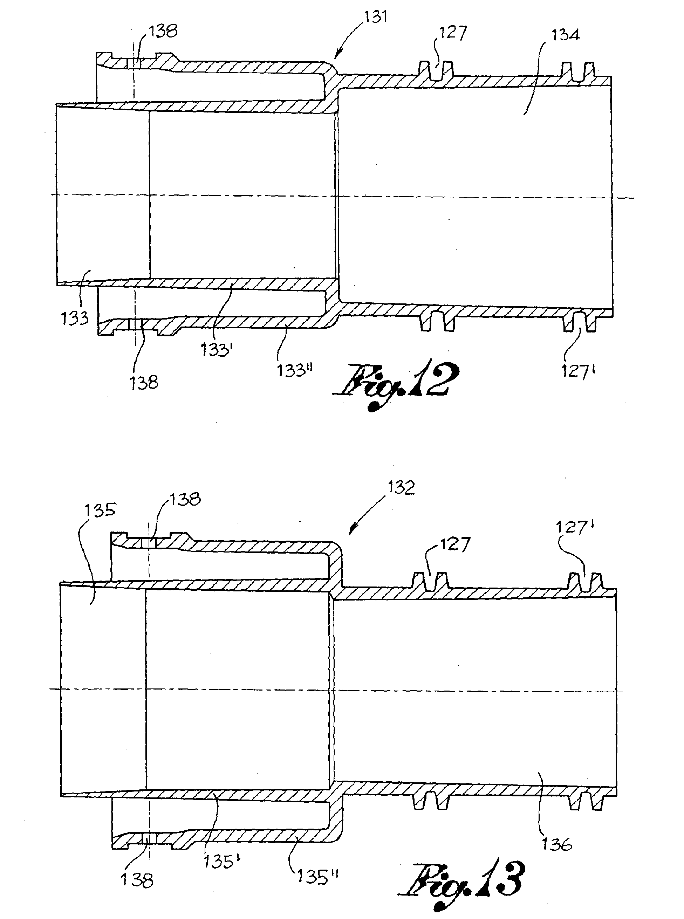

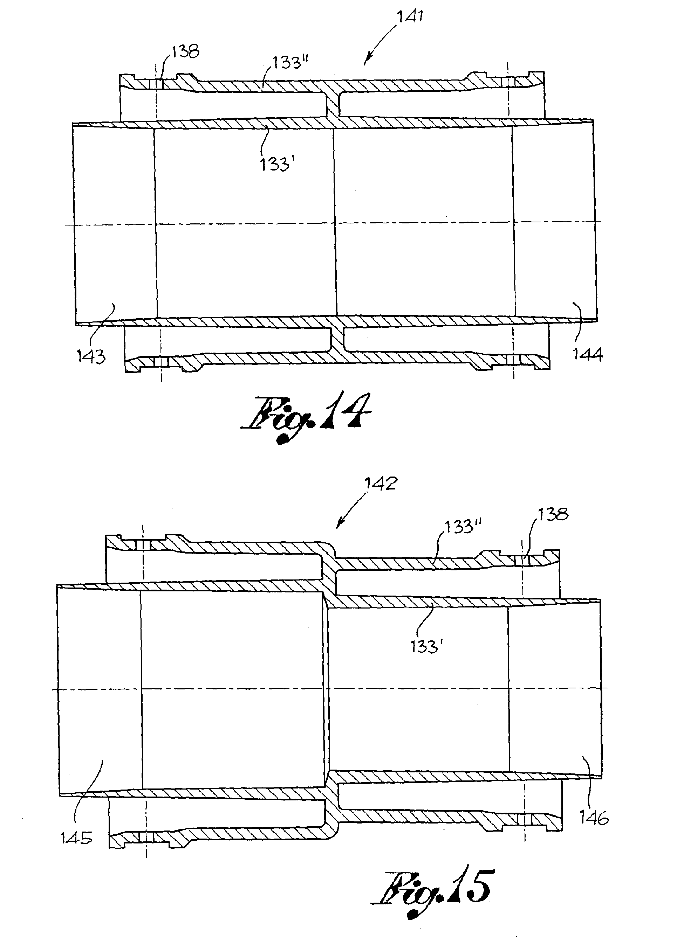

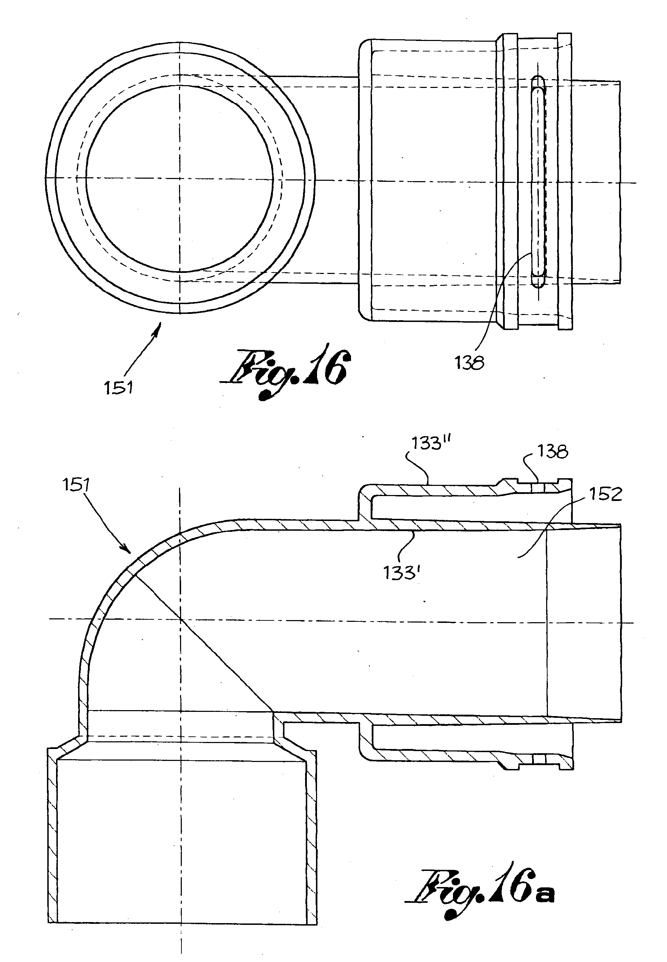

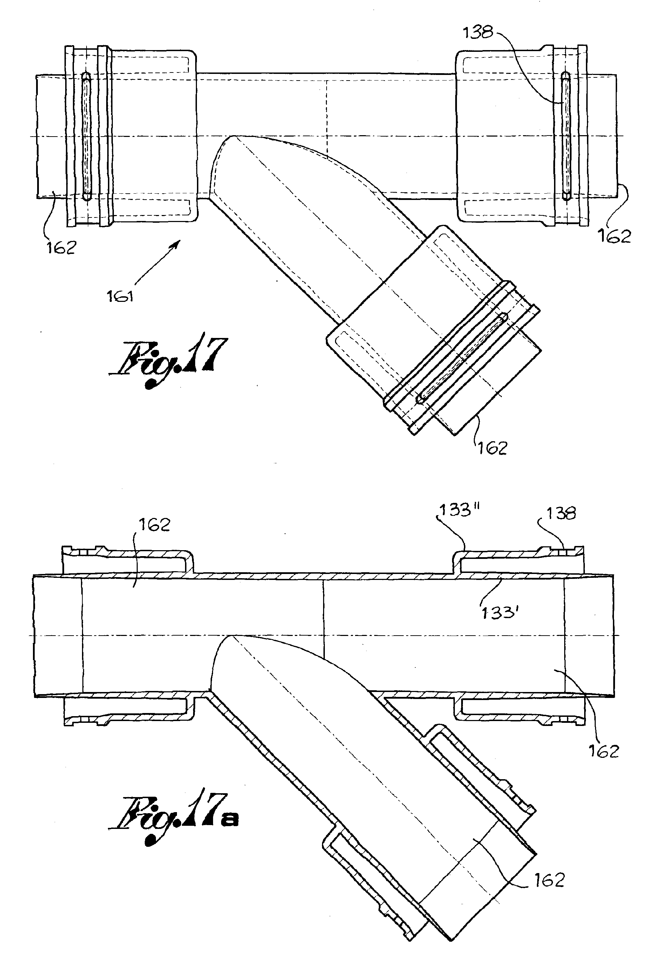

Figs 1, 2 and 4 show part of a flexible corrugated tube 11 and an end coupling 12, it being understood that the tube may be of any length and that it will be equipped with a coupling at either end. The end couplings at the two ends of the tube may be one male and the other female, or both male or both female, as circumstances require. The tube and couplings are prepared separately and the couplings may be made in the same or different plastic from that of the tube. The structure of the corrugated tube itself is well-known and does not require particular description here. All that need be mentioned is that, for special uses, the tube 11 may be fitted with an internal lining 11', which has the function of closing the inward facing hollows in the undulations.

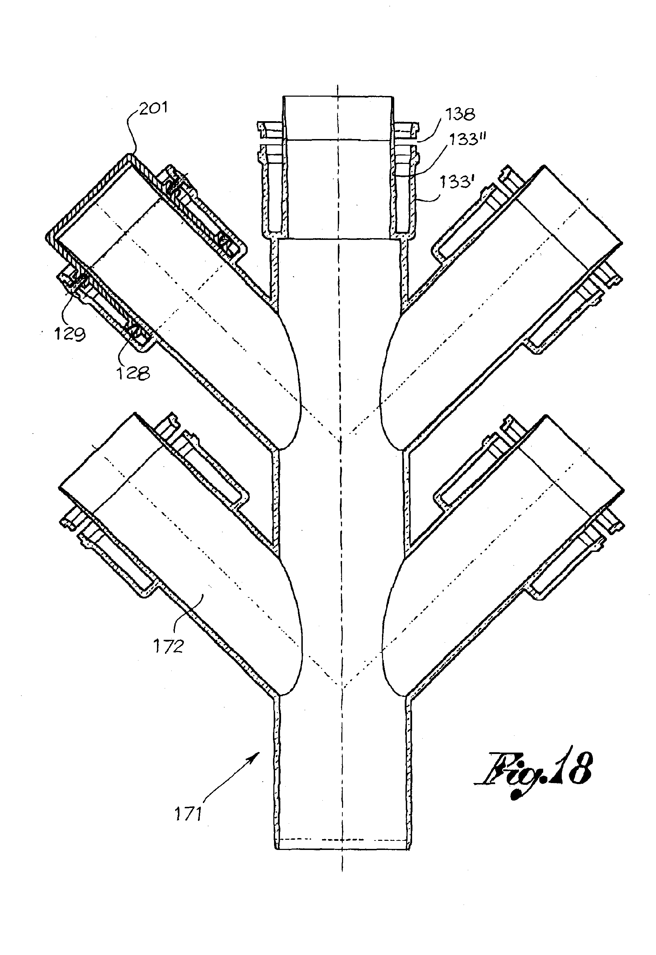

In the example shown, where the end coupling 12 is attached to the corrugated tube 11, there are two concentric walls 13, 14, which define, between them, a circular gap 15 with a closed bottom 16 - Fig. 2 - which is intended to house one end of said tube, with the interposition of at least one grommet 17. Ideally, the internal wall 13 is longer than the external wall 14, protruding axially from the latter. Said internal wall 13 may be a single piece with the coupling 12, as shown, or it may be separate and inserted into the tube end prior to coupling. In this second case, the wall 17 may also be made of metal. On the outside wall, near the free end, there are two slots 18 which are diametrically opposed and in a plane which is perpendicular and at right angles to the coupling axis - Figs 1 and 2. Said slots 18 are designed to receive the two opposing arms 19 of a yoke clamp or clip 20 between the tube and coupling, these arms 19 being designed to fit into an external groove of the tube.

Having chosen the length of the tube 11 or cut it to the size required, at least one grommet 17 is applied around the corrugated tube, inserting it into an external groove, near the end of the tube itself. Then the end of the tube is inserted into the circular gap 15 between the two concentric walls of the coupling 12. Finally, the arms 19 of the yoke clamp or clip 20 are inserted into the slots 18 in the external wall of the coupling, blocking the latter to the tube. The yoke clamp or clip 20 straddles the external wall of the coupling - Figs 4 and 5 - and its arms, inserted into the slots, fit into an external groove of the tube, thereby ensuring the mechanical coupling of the two components, while, on the other hand, the one or more grommets 17 ensure that the whole is leak-proof.

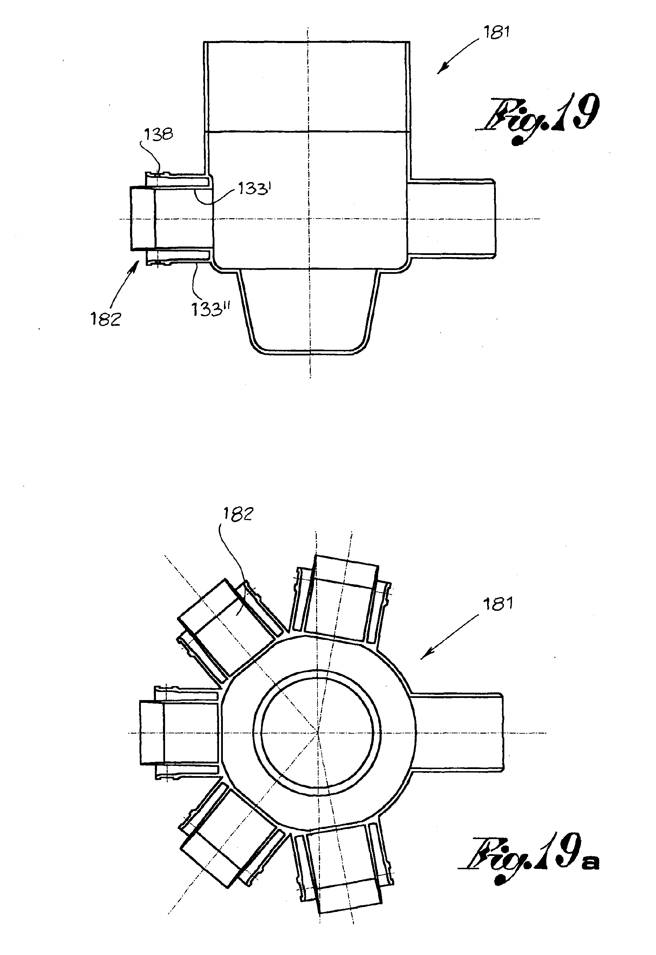

In one favoured version, shown in Figs 6 and 7, one of the arms 19 of the yoke ends in a tooth 21 and the other in a matching catch 22, so that they can fasten together.

Towards the end of each extremity there is a small catch peg 23. Manipulating these small pegs 23, the tooth 21 and the catch 22 can be linked together, thereby strengthening the joint between the tube and the end coupling. In this way, the yoke remains tightly fastened to the coupling and tube and it cannot come undone accidentally.

In another version, corresponding to Figs 8 and 9, the yoke 20 has two arms 24 which have two opposing teeth 25 facing towards the top of the yoke. When the two arms 24 are inserted into the slots 18, the two teeth 25 come to rest under the ends of the slots in the outside wall 14 of the coupling into which they are inserted, acting as undercuts, in this way, preventing the yoke from opening accidentally.

In one variation, the yoke could be blocked in place by means of a bushing that slides or screws onto the coupling and which has a part that overlaps the yoke itself, enclosing it.

In another variation, the yoke can consist of two halves and, as above, a bushing can slide or screw onto the coupling in order to block the yoke in place.

The corrugated tube, complete with end couplings can be connected to other similar tubes or to complementary bodies, such as those shown in Figs 10-22.

In all these representations, similar or equivalent parts are indicated with the same reference numbers.

Figs 10 and 11 show the bodies of two joints 121, 122 for tubes that differ only in the fact that one of them has two parts 123, 124 of similar diameter, while the other has two parts 125, 126 of different diameter. On each part of either body there are two pairs of external radial ridges 127, 127': one pair designed to receive a grommet 128, and the other intended to receive the arms of a yoke clamp 20 - Fig. 22.

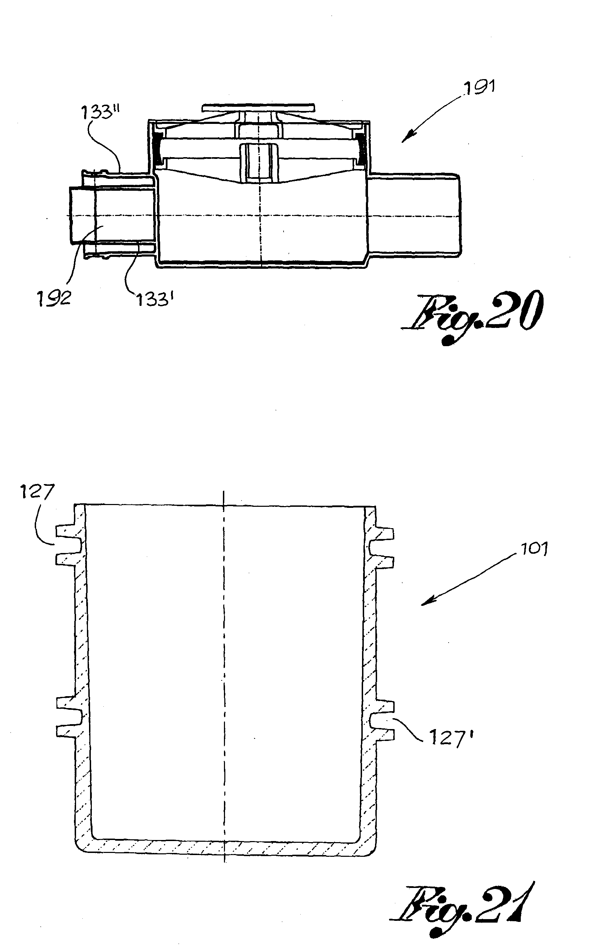

Figs 12 and 13 show two similar bodies 131, 132, one acting as a reduction and the other as an increase, having their two parts 133, 134 and 135, 136, respectively, of different internal diameter. Each body has one part 133, 135 (on the left of the drawing), with an internal wall 133', 135', an external wall 133", 135" and a cylindrical part 134, 136 (on the right of the drawing), with two pairs of external radial ridges 127, 127'. In the external wall of the part 133, 135 there are two slots 138, diametrically opposite one another, intended to let pass the arms of a yoke clamp 20 so that these can grip the groove of a flexible corrugated tube, the end of which, equipped with a grommet 17, is inserted between the internal and external walls, as shown in Fig. 22. One pair of ridges 127 of the other part 134, 136 is designed to receive a grommet 128, while the other pair of ridges 127' is intended to interact with a yoke clamp 20, as described below - Fig. 22.

Figs 14 and 15 show two adapter or joint bodies 141, 142, each with parts 143, 144; 145, 146 respectively, which have the same diameter in one body and a different diameter in the other. In this version, each part 143-146 has a practically identical structure to that described for parts 133, 135 of the reduction and increase in Figs 12 and 13.

Figs 16 and 16a show a view and a cross-section of a technical bend 151, in which the branch 152 has a structure which is practically identical to that described for the parts 133, 135 in the bodies in Figs 12 and 13.

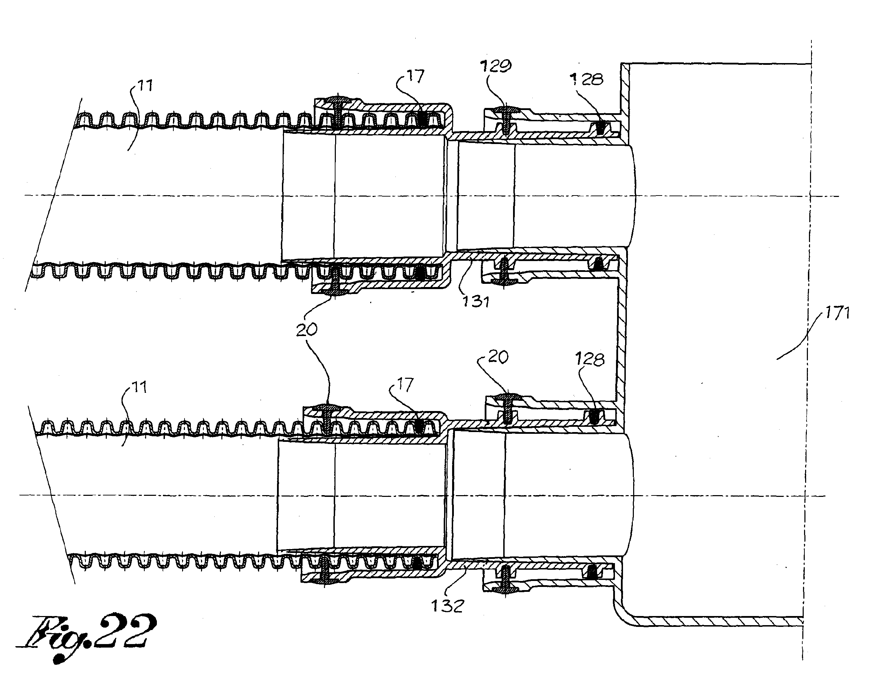

Figs 17 and 17a show a view and a cross-section of a Y branch 161, each branch 162 of which has a practically identical structure to that described for parts 133, 135 of the reduction and the increase in Figs 12 and 13.

Fig. 18 shows a manifold 171 for various openings, where each opening 172 has a structure that is practically identical to that described for parts 133, 135 of the bodies in Figs 12 and 13. All the openings may be the same, or some may be different, to give a different coupling diameter.

Figs 19 and 19a show an axial and a horizontal cross-section of a well trap 181 with multiple openings 182, where each opening, or some of them, have a structure that is practically identical to that described for parts 133, 135 of the bodies in Figs 12 and 13. The openings may be all the same, or some may be different, to give a different coupling diameter, as needed.

Fig. 20 shows a cross-section of a well trap 191 with multiple openings 192, at least one of which has a structure that is practically identical to that described for parts 133, 135 of the bodies in Figs 12 and 13.

Fig. 21 shows a plug 101 with two pairs of ridges 127, 127' designed to match with and to close one of the openings in the above-mentioned bodies, as shown in the well trap in Fig. 18.

Finally, Fig. 22 shows one connection method, from one side of a tube 11 to a reduction adapter 131 or increase adapter 132, with the interposition of a grommet 128 and the use of a yoke clamp 20, gripping a groove in the tube, and from the other side of the adapter 131, 132 to an opening in one of the bodies described above as a well trap 171, with the interposition in all cases of a grommet between the two ridges and a yoke gripping the other pair of ridges.

Obviously, these elements can also be combined in other ways, according to necessity.

## Claims

1. Flexible corrugated tube in plastic with at least one wall uniformly corrugated or grooved and, where necessary, an internal lining, equipped with male and/or female end couplings designed for use in hydraulic systems, characterised by the fact that each end coupling (12) is coupled axially and fixed to an extremity of the corrugated tube (11), with the interposition of at least one grommet (17) and with at least one yoke clamp or clip (20) that fastens tangentially in at least one external groove of the corrugated tube, passing through slots (18) made in one part of the coupling that encircles the tube itself.

2. Flexible tube according to claim 1, which may be selected and/or cut to obtain the right length, in which each coupling (12) has two concentric walls (13, 14) in the part for attaching to the tube, which define a gap (15) with a bottom, the end of the tube being inserted and blocked in said gap thanks to the interposition of at least one grommet (17) and the use of said yoke or clip (20).

3. Flexible tube according to claims 1 and 2, in which said grommet (17) is inserted into an external groove of the corrugated tube (11), in which said slots (18) are cut, diametrically opposite one another, on the external wall (14) of said part of the coupling with two concentric walls (13, 14), and in which the yoke or clip (20) straddles said external wall of the coupling and has two arms that insert into and hold said slots (18) and into a groove in the corrugated tube.

4. Flexible tube according to claim 3, in which said yoke or clip extends more than half way around the tube circumference.

5. Flexible tube according to the previous claims, in which the yoke clamp or clip (20) is equipped with means for pressure fastening it to the coupling inside the tube.

6. Flexible tube according to claim 5, in which the yoke clamp has two arms (19), with ends equipped with means for secondary gripping (21, 22) for closing the yoke around the assembled tube and coupling.

7. Flexible tube according to claim 6, in which the yoke clamp is furnished at the end of its arms (19) with a pair of clasping pins (23).

8. Flexible corrugated tube according to claim 5, in which the yoke clamp has two arms (24) furnished with slip-resistant teeth (25), interacting with undercuts on the coupling.

9. Flexible corrugated tube according to claim 5, in which the yoke is blocked around the circumference of the coupling.

10. Flexible corrugated tube according to claim 5 in which the yoke consists of two complementary parts that can be blocked around the circumference of the coupling.

11. Flexible tube according to any of the previous claims, to be connected to a body for the formation of hydraulic systems, where said body is a well trap, a manifold, a technical bend, a Y branch, a joint or similar and where there is at least one part of the attachment with an internal wall (133', 135') that is concentric with an external wall (133", 135"), provided with slots (138), designed to be penetrated by the arms of a yoke clamp or clip (129) interacting with the corrugated tube, inserted between said two walls and having at least one groove for coupling with the arms of said yoke.

12. Body for the formation of hydraulic systems according to claim 11, having at least one part of the attachment with a cylindrical wall (123, 125) on which there are situated pairs of external radial ridges (127, 127'), one intended to receive a grommet (128), the other designed to receive the arms of a yoke clamp (129).

13. Body for the formation of hydraulic systems according to claim 11, having two coaxial and opposite parts, each with an internal wall (133', 135') concentric with an external wall (133", 135"), that has slots (138) designed to be penetrated by the arms of a yoke clamp or clip (129), acting upon an element inserted between said two walls and having at least one coupling groove for the arms of said yoke, the body being that of a joint with or without reduction or increase.

14. Body for the formation of hydraulic systems according to claim 11, having two coaxial and opposite parts, each with a cylindrical wall (123, 125) on which there are located pairs of external radial ridges (127, 127'), one designed to receive a grommet (128), and the other designed to receive the arms of a yoke clamp (129), the body being that of a joint with or without reduction or increase.

15. Body for the formation of hydraulic systems according to claim 10, having two coaxial and opposite parts, of which one with an internal wall (133', 135') concentric with an external wall (133", 135"), provided with slots (138) designed to be penetrated by the arms of a yoke clamp or clip (129), interacting with an element inserted between said two walls and having at least one coupling groove for the arms of said yoke, the other having a cylindrical wall (123, 125) with pairs of external radial ridges (127, 127'), one pair intended to receive a grommet (128), and the other intended to receive the arms of a yoke clamp (129), the body being that of an adapter with or without reduction or increase.
